# EUROPÄISCHE PATENTSCHRIFT

(11) **EP 0 890 472 B1**
(45) Veröffentlichungstag und Bekanntmachung des Hinweises auf die Patenterteilung: **09.10.2002**
(21) Anmeldenummer: 98112711.1
(22) Anmeldetag: 09.07.1998
(51) Int. Cl.: B60K 37/00

(54) **Instrumententafel eines Kraftfahrzeugs mit einem versenkbaren Bildschirmeinsatz**
Motor vehicle dashboard with pop-up display unit
Tableau de bord de véhicule à moteur avec un écran rétractable

(30) Priorität: 11.07.1997 DE 19729856
(43) Veröffentlichungstag der Anmeldung: 13.01.1999
(73) Patentinhaber: Volkswagen Aktiengesellschaft, 38436 Wolfsburg (DE)
(72) Erfinder: Andronis, Odysseus, 38100 Braunschweig (DE); Hofmann, Gustav, 31275 Hämelerwald (DE)
(74) Vertreter: Liebl, Thomas

(56) Entgegenhaltungen:
- EP-A- 0 409 232
- US-A- 2 946 982
- PATENT ABSTRACTS OF JAPAN vol. 14, no. 410 (M-1020), 5. September 1990 -& JP 02 158437 A (MATSUSHITA ELECTRIC), 18. Juni 1990
- PATENT ABSTRACTS OF JAPAN vol. 15, no. 283 (M-1137), 18. Juli 1991 -& JP 03 099955 A (MATSUSHITA ELECTRIC), 25. April 1991
- PATENT ABSTRACTS OF JAPAN vol. 18, no. 559 (M-1692), 25. Oktober 1994 -& JP 06 199186 A (TOSHIBA), 19. Juli 1994
- PATENT ABSTRACTS OF JAPAN vol. 96, no. 5, 31. Mai 1996 -& JP 08 009291 A (AQUEOUS RES.), 12. Januar 1996

## Beschreibung

Die Erfindung betrifft Instrumententafel eines Kraftfahrzeugs mit einem versenkbaren Bildschirmeinsatz nach dem Oberbegriff des Anspruchs 1.

In modernen Kraftfahrzeugen werden zunehmend Bildschirme an der Instrumententafel als Navigationsdisplays und/oder für Verkehrslage- und Wetterangaben sowie zur Unterhaltungszwecken eingesetzt. Da solche Bildschirme relativ groß sind und nicht ständig verwendet werden, ist es zweckmäßig diese bei Nichtbenutzung in der Instrumententafel zu versenken.

Bei einer bekannten Instrumententafel mit einem versenkbaren Bildschirmeinsatz (DE 41 28 663 A1) ist in der Instrumententafel ein Aufnahmeraum für den Bildschirmeinsatz und eine Führungs- und Halteeinrichtung als Verbindung zwischen der Instrumententafel und dem Bildschirmeinsatz vorgesehen. Weiter umfasst diese Anordnung eine Antriebs- und Arretiereinrichtung für den in eine Ruhestellung im Aufnahmeraum versenkbaren und für den in eine Gebrauchsstellung aus dem Aufnahmeraum zumindest teilweise herausbewegbaren Bildschirmeinsatz. Der Aufnahmeraum besteht hier aus einem in einer Horizontalebene liegenden Aufnahmeschlitz im unteren Bereich der Instrumententafel, aus dem der flache. Bildschirmeinsatz mit nach oben weisendem Bildschirm in das Blickfeld eines Benutzers ausfahrbar ist. Als Führungs- und Halteeinrichtung sind hier die Begrenzungen des Aufnahmeschlitzes verwendet. Als Antriebs- und Arretiereinrichtung zur Bewegung und Festlegung des Bildschirmeinsatzes ist ein elektrischer Stellmotor eingesetzt. Eine solche Anordnung ist durch die Verwendung eines Motors aufwendig und teuer. Durch die lineare Ausfahrbewegung des Bildschirms mit nach oben weisendem Bildschirm aus einem Aufnahmeschlitz ist nur eine Anordnung im unteren Bereich der Instrumententafel zweckmäßig, wobei die Blickrichtung flach und nicht optimal auf den Bildschirm ist. Zudem muß ein Fahrer, der auf den Bildschirm blickt, um beispielsweise Navigationsdaten abzulesen, seinen Blick nachteilig weit nach seitlich unten von der Fahrbahn abwenden. Eine Anordnung in einem höheren Bereich der Instrumententafel ist nicht möglich, da dann die Blickrichtung zu flach auf den Bildschirm wäre und insbesondere moderne Flachbildschirme dann nicht mehr abgelesen werden könnten. Somit sind hier nachteilig nur geringe konstruktive Freiräume für die Anordnung des Bildschirmeinsatzes vorhanden und zudem ist die Blickrichtung auf den Bildschirm ungünstig flach.

In einer ähnlichen bekannten Anordnung eines versenkbaren Bildschirmeinsatzes in einer Instrumententafel (EP 0 338 405 A2) wird dieser ebenfalls aus einem horizontalen Aufnahmeschlitz herausgezogen. In dieser ausgezogenen Stellung ist der Bildschirmeinsatz zur Einstellung und Anpassung einer optimalen Draufsicht in Vertikal- und Horizontalrichtung verschwenkbar. Nachteilig ist hier eine komplizierte, anfällige Schwenkeinrichtung. Zudem muss zum Einschieben des Bildschirmeinsatzes in den Aufnahmeschlitz der Bildschirmeinsatz wieder zurückgeschwenkt und genau fluchtend mit dem Aufnahmeschlitz ausgerichtet werden, was die Handhabung erschwert.

In einer weiter bekannten Anordnung eines Bildschirmeinsatzes an einer Instrumententafel (EP 0 675 019 A1) weist die Instrumententafel in einem unteren Bereich in der Nähe der Längssäule eine in einer Horizontalebene vorstehende Wand auf mit einem rechtwinkeligen Ausschnitt entsprechend der rechtwinkeligen Gestalt eines Flachbildschirmeinsatzes. Der Flachbildschirmeinsatz ist um eine Querachse schwenkbar in diesem Ausschnitt gehalten. In der Ruhestellung ist er mit der vorstehenden Wand fluchtend in diese so eingeklappt, daß der Ausschnitt ausgefüllt ist. In der Gebrauchsstellung ist der Flachbildschirmeinsatz etwa um 90° aus dem Ausschnitt herausgeschwenkt. Eine solche Anordnung ist nur speziell in einer horizontal vorstehenden Wand einer Instrumententafel unter Verwendung eines Flachbildschirmeinsatzes einsetzbar, so dass diese Anordnung nur an speziell gestalteten Instrumententafeln möglich ist. Offensichtlich erforderliche Arretierungen und Halterungen zur Festlegung des Flachbildschirmeinsatzes in der Ruhestellung und in der Gebrauchsstellung sowie ggf. ein Antrieb sind hier offen gelassen.

Weiter ist ein versenkbares Armaturenfeld in einer Instrumententafel bekannt (DE-GM 86 11 331). Das Armaturenfeld umfasst alle wesentlichen Anzeigen im Blickfeld des Fahrers hinter dem Lenkrad und ist zum Schutz der Anzeigen um eine Querachse in einen Aufnahmeraum so einschwenkbar, dass eine Rückwand dieses Armaturenfeldes mit angrenzenden Wänden der Instrumententafel fluchtet. Bei dem Armaturenfeld handelt es sich hier um ein großes, relativ schweres Bauteil, das in aufwendiger Weise mit einem elektrischen Getriebemotor und einem selbsthemmenden Schneckenantrieb von seiner Ruhestellung in die Gebrauchsstellung verlagerbar ist.

Eine bekannte Abdeckung für ein Ablagefach in einer Instrumententafel eines Kraftfahrzeugs (DE 37 08 744 A1) umfasst einen Deckel, der mit einem Führungsgestänge verbunden ist, mit dem er federangetrieben in eine Stellung parallel zur Instrumententafel nach oben schwenkbar ist. Zudem ist ein Dämpfungselement in Verbindung mit dem Federantrieb verwendet. Der hier gezeigte federangetriebene Deckel ist nicht versenkbar.

Aus der gattungsgemäßen JP 08009291 ist eine Instrumententafel eines Kraftfahrzeug mit einem versenkbaren Bildschirmeinsatz bekannt, die einen Aufnahmeraum in der Instrumententafel für den darin versenkbaren Bildschirmeinsatz aufweist und zudem eine Führungs- und Halteeinrichtung als Verbindung zwischen der Instrumententafel und dem Bildschirmeinsatz aufweist. Ferner ist eine Antrieb und Arretiereinrichtung für den in eine Ruhestellung im Aufnahmeraum versenkbaren und für den in eine Gebrauchsstellung aus dem Aufnahmeraum zumindest teilweise herausbewegbaren Bildschirmeinsatz vorgesehen.

Konkret wird hier der versenkte Bildschirmeinsatz bei Betätigung der Zündung mittels einer Zahnrad- und Gestängeanordnung, die mit einem Antriebsmotor gekoppelt ist, aus dem Aufnahmeraum der Instrumententafel heraus gefahren und beim Abschalten der Zündung wieder in den Aufnahmeraum in der Instrumententafel eingefahren. Nachteilig hierbei ist, dass der Bildschirmeinsatz bei jedem Betrieb des Fahrzeugs zwingend heraus gefahren ist, so dass der Bediener keinerlei Möglichkeit hat, den Bildschirm bei Nichtbedarf in der versenkten Ruhestellung zu halten. Dies ist insbesondere bei alltäglichen Wegen störend. Zudem stellt ein derartiger dauerhaft während des Fahrzeugbetriebs herausgefahrener Bildschirmeinsatz eine Beeinträchtigungsgefahr für den oder die Fahrzeuginsassen bei einem Unfall dar. Des weiteren ist ein derartiges motorisches Herausfahren des Bildschirms sowie das Vorsehen von Zahnrädern und einem Gestänge nur relativ aufwendig und damit wenig preisgünstig herstellbar. Ein weiteres in Verbindung mit einem derartigen Aufbau auftretendes Problem ist, dass hier der Bildschirmeinsatz unmittelbar in die Instrumententafel als solche integriert ist, so dass für unterschiedliche Fahrzeugtypen jeweils unterschiedliche Instrumententafelanordnungen erforderlich sind, um den Bildschirmeinsatz und ggf. weitere damit in Verbindung stehende Bedienelemente optimal an die jeweiligen Fahrzeuggegebenheiten insbesondere im Hinblick auf die Position der Fahrzeuginsassen anzupassen. Ein weiterer Nachteil eines derartigen Aufbaus ist, dass hier im Rahmen der Endmontage eine aufwendige Verkabelung der Elektroteile, insbesondere des Bildschirmeinsatzes erforderlich ist.

Weiter ist aus der JP 03099955 ein dauerhaft sichtbarer Flachbildschirm bekannt, der in einem Aufnahmeraum an der Sitzlehnenrückseite aufgenommen ist. Dieser Flachbildschirm ist mit einem Schalter gekoppelt dergestalt, dass bei einem Drücken auf dem Bildschirm eine Verriegelung gelöst wird und gleichzeitig ein Schaltknopf zum Einschalten des Fernsehgerätes betätigt wird. Der Flachbildschirm kann hier aus dem Aufnahmeraum herausgeklappt werden, wozu eine Schenkelfeder verwendet wird, die den Bildschirm in der herausgeschwenkten Stellung zudem abstützt.

Weiter ist aus der EP 0409232 A2 ein Bildschirmeinsatz in Verbindung mit einem ineinander geschachtelten teleskopartigen Aufbau bekannt, der durch Drücken entriegelt wird, wobei eine Feder den gesamten Aufbau insgesamt ausrückt. Die einzelnen Teile können dann teleskopartig manuell ausgezogen werden. Im vollausgezogenen Zustand kann das vorderste Teil, das den Bildschirm ausbildet, dann manuell um ein Scharnier nach oben geschwenkt werden.

Ferner ist aus der JP 02158437 ein Aufbau in Verbindung mit einer von einer Rücksitzlehne eines Sitzes wegklappbaren Tischplatte bekannt in die in einem mittleren Bereich ein Bildschirmeinsatz eingesetzt ist. Dieser Bildschirmeinsatz kann über eine Kulissenführung beim Aufschwenken einer Klappe in eine Gebrauchsstellung überführt werden. Eine Schraubenfeder ist hier dazu vorgesehen, den Aufbau in der Gebrauchsstellung zu halten.

Aufgabe der Erfindung ist es daher, eine Instrumententafel eines Kraftfahrzeuges mit einem versenkbaren Bildschirmeinsatz zu schaffen, wobei der Bildschirmeinsatz preisgünstig anordenbar und bei hoher Funktionssicherheit auch einfach handhabbar ist.

Diese Aufgabe wird gelöst mit den Merkmalen des Anspruchs 1.

Gemäß Anspruch 1 umfasst die Antrieb- und Arretiereinrichtung einen Federantrieb und ist der Bildschirmeinsatz Bestandteil eines Instrumententafelblocks mit einem Bedienblock, wobei der Instrumententafelblock als Ganzes auf die als Träger dienende Instrumententafel aufsetzbar und dort mechanisch und über ein eingebautes Stecksystem elektrisch mit der Bordelektronik verbindbar ist.

Vorteilhaft ist der Bildschirmeinsatz hier Bestandteil eines vormontierbaren und kompakten Instrumententafelblocks, der auf die Instrumententafel als Träger aufgesetzt werden kann.

Ein weiterer Vorteil dieses Aufbaus ist es, dass ein Federantrieb zum Ausfahren des Bildschirmeinsatzes keine Hilfsenergie und keine Verbindung zur Bordelektronik benötigt und somit wesentlich preisgünstiger herstellbar ist, als ein motorischer Antrieb. Zudem ist ein derartiger Aufbau mit einem Federantrieb gegenüber einem motorischen Antrieb weniger störanfällig. Der Federantrieb kann bei einer entsprechenden Auslegung der Federkraft bequem und einfach individuell von Hand betrieben werden, sofern der Bediener dies wünscht.

Je nach den vorliegenden, fahrzeugtypischen Gegebenheiten und der Dimensionierung des Federantriebs kann es zweckmäßig sein, in der Ruhestellung und/oder der Gebrauchsstellung des Bildschirmeinsatzes eine von Hand lösbare Ruhestellungsraste und/oder Gebrauchsstellungsraste anzubringen. Die Raste kann dabei je nach Ausführung durch einen handbetätigbaren Riegel gelöst werden oder bei einer Clip-Raste von Hand sowohl eingerastet als auch ausgerastet werden.

In einer ersten Ausführungsform eines Federantriebs wird vorgeschlagen, diesen so auszulegen, dass der Bildschirmeinsatz in der Ruhestellung in dessen Richtung und in der Gebrauchsstellung ebenfalls in dessen Richtung gegen zugeordnete Anschläge vorgespannt ist mit einer Umkehr der Vorspannungsrichtung zwischen der Ruhestellung und der Gebrauchsstellung. Dies ist in an sich bekannter Weise beispielsweise durch einen Totpunktdurchgang der eingesetzten Federn zwischen der Ruhestellung und Gebrauchsstellung möglich. Damit ist der Bildschirmeinsatz durch Drücken aus der Gebrauchsstellung in die Ruhestellung im Aufnahmeraum und durch Ziehen von der Ruhestellung aus dem Aufnahmeraum in die Gebrauchsstellung überführbar (push-pull-Technik). Bei einer relativ starken Auslegung des Federantriebs wird hier der Bildschirmeinsatz sowohl in die Ruhestellung als auch in die Gebrauchsstellung alleine durch die Federkraft gedrängt und dort jeweils stabil gehalten. Je nach den Gegebenheiten können in diesen Stellungen auch die vorstehend genannten Rasten, insbesondere Clip-Rasten eingesetzt werden.

in einer alternativen Ausführungsform ist der Bildschirmeinsatz durch den Federantrieb einseitig nur in Richtung auf die Gebrauchsstellung vorgespannt und in der versenkten Ruhestellung durch eine Ruhestellungsraste gehalten. Diese Ruhestellungsraste ist in an sich bekannter Weise so ausführbar, dass bei der Überführung des Bildschirmeinsatzes in die Ruhestellung dieser einrastet und bei einem erneuten Druck in diese Richtung die Ruhestellungsraste freigegeben wird (push-push-Technik). Damit wird eine besonders einfache Handhabung erreicht.

Bei dieser Ausführungsform kann der Bildschirmeinsatz bei entsprechend starker Auslegung der Federkraft durch diese nach der Freigabe der Ruhestellungsraste in die Gebrauchsstellung überführt werden. Falls erforderlich kann er dort zusätzlich zur Federanlage durch eine in Richtung Ruhestellung von Hand überdrückbare Gebrauchsstellungsraste gehalten sein. Damit ist durch Drücken in Richtung Ruhestellung der Bildschirmeinsatz sowohl aus der Ruhestellung entrastbar, als auch von der Gebrauchsstellung in die Ruhestellung überführbar. Die Bewegung von der entrasteten Ruhestellung in die Gebrauchsstellung erfolgt durch Federkraft.

Falls die Federkraft nur gering dimensioniert wird, und nur im Bereich der Ruhestellung wirkt, wird der Bildschirmeinsatz nach einem Druck und einer Freigabe der Ruhestellungsraste, selbsttätig nur wenig aus dem Ausnahmeraum in eine Griffposition herausbewegt. Dort kann der Bildschirm bequem ergriffen werden und von Hand in die Gebrauchsstellung überführt werden (push-pull-Technik).

Die bisher angegebenen Ausführungsformen mit einem Federantrieb sind grundsätzlich bei einer schubladenartigen Versenkung eines Bildschirmeinsatzes mit einer Linearbewegung als auch bei Klappbewegungen eines Bildschirmeinsatzes realisierbar.

In einer besonders bevorzugten Ausführungsform wird der Bildschirmeinsatz in einer Schwenkverbindung mit einer horizontalen Querachse in der Instrumententafel gehalten. Zweckmäßig wird der Federantrieb dabei einfach durch eine Spiralfeder im Achsbereich ausgebildet, wobei sich ein Schenkel der Spiralfeder an der Instrumententafel und ein anderer Schenkel der Spiralfeder am Bildschirmeinsatz abstützt. Damit wird ein besonders einfacher und kostengünstiger Aufbau erreicht. Zudem kann ein aufschwenkbarer Bildschirmeinsatz in einer günstigen Blickposition relativ weit oben an der Instrumententafel angebracht werden.

Für eine ansprechende Optik wird eine Bildschirmeinsatzsichtwand vorgeschlagen, die im versenkten Ruhezustand des Bildschirmeinsatzes mit einer umgebenden Instrumententafelwand fluchtet. Die Bildschirmeinsatzsichtwand und der Bildschirm können dabei fest in einer Winkelanordnung angebracht sein, so dass beim Hochschwenken der Bildschirmeinsatzsichtwand in eine schräg nach oben weisende Stellung der Bildschirm eine optimal einsehbare Stellung etwa in einer vertikalen Querebene, bevorzugt im oberen Bereich der Instrumententafel einnimmt.

Bei Verwendung eines flachen Bildschirmeinsatzes kann ggf. die Bildschirmeinsatzsichtwand mit einem Rahmen des Flachbildschirms gelenkig und dieser weiter über Führungen mit der Instrumententafel verbunden sein. Damit lässt sich ebenfalls eine entsprechende Aufklappung des Bildschirms bei geringem Aufnahmeraumvolumen erreichen.

Für eine griffige Handhabung in push-pull-Technik oder push-push-Technik an der Außenseite der Bildschirmeinsatzsichtwand wird dort vorteilhaft eine Struktur, insbesondere eine Querwellung angebracht.

Eine konstruktiv günstige und optisch ansprechende Anordnung ergibt sich, wenn der Bildschirmeinsatz oberhalb eines Bedienblocks des Instrumententafelblocks in der Breite des Bedienblocks angebracht ist.

Zu beiden Seiten des Bedienblocks können vorteilhaft als Bestandteil des Instrumentenblocks streifenförmige Leuchtenfelder angeordnet werden, die bevorzugt ebenfalls eine Struktur als Querwellung aufweisen. Diese Querwellung ist optisch ansprechend und kann zugleich zur Verringerung von Blendwirkungen und Reflexionen dort eingebauter Leuchtquellen, wie z. B. beleuchtbarer Schalter oder Kontrollleuchten verwendet werden.

Um insbesondere bei einer stärkeren Auslegung des Federantriebs schnelle, ruckartige Bewegungen des Bildschirmeinsatzes zu vermeiden, wird in einer bevorzugten Ausführungsform vorgeschlagen, an sich bekannte Dämpfungsglieder zur Verlangsamung und Vergleichmäßigung der Bewegungsabläufe einzusetzen.

Anhand einer Zeichnung wird ein Ausführungsbeispiel der Erfindung näher erläutert.

Es zeigen:
- Fig. 1: eine perspektivische Ansicht eines mittleren Bereichs einer Instrumententafel mit einem in einer Ruhestellung versenkten Bildschirmeinsatz, und
- Fig. 2: eine Ansicht gemäß Fig. 1 mit dem in eine Gebrauchsstellung ausgeschwenkten Bildschirmeinsatz.

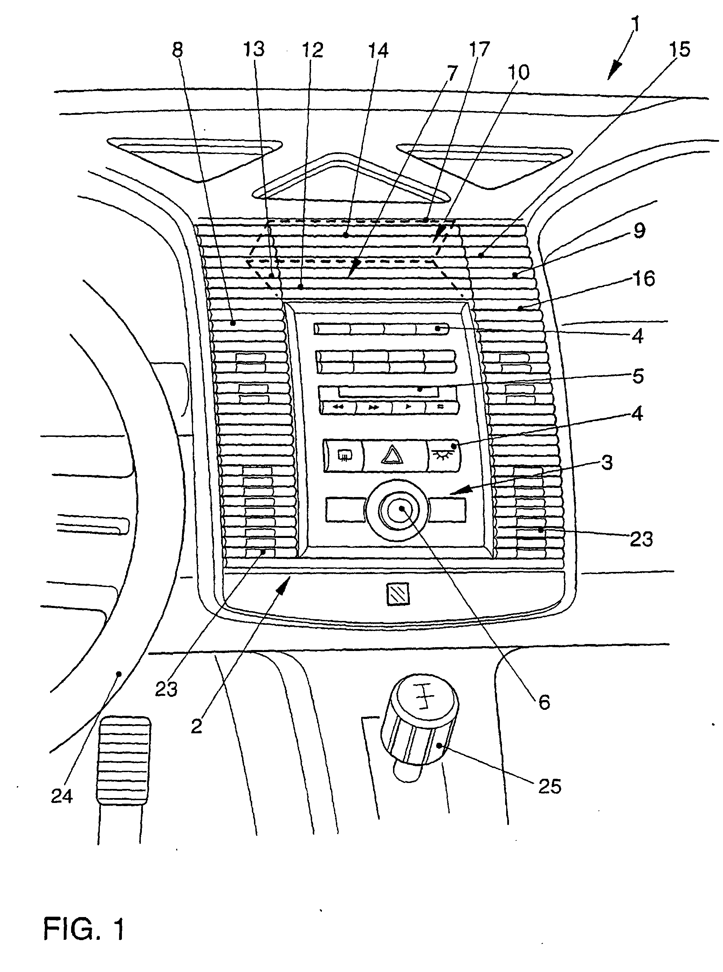

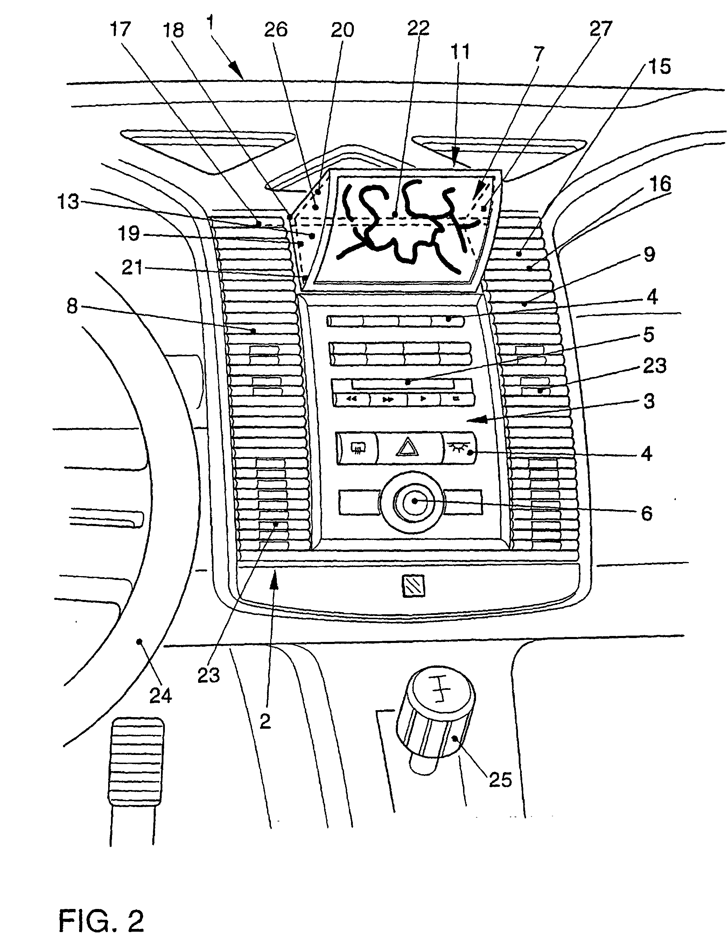

In den Fig. 1 und 2 ist jeweils ein Instrumententafelblock 2 dargestellt, der in einem mittleren Bereich einer Instrumententafel 1 eines Kraftfahrzeugs benachbart zu einem Lenkrad 24 und einem Schalthebel 25 angeordnet ist. Dieser Instrumententafelblock 2 ist als ganzes auf die Instrumententafel 1 aufgesetzt und dort mechanisch sowie über ein eingebautes Stecksystem elektrisch mit der Bordelektronik verbunden.

Der Instrumententafelblock 2 umfasst einen Bedienblock 3, auf dem neben verschiedenen Tasten 4 auch ein Kassettendeck 5 sowie weitere Bedienelemente 6 angeordnet sind. Weiter umfasst der Instrumententafelblock 2 zu beiden Seiten des Bedienblocks 3 streifenförmige Leuchtenfelder 8, 9, die eine querverwellte Struktur 16 aufweisen. Diese Querverwellung 16 ist optisch ansprechend und dient zugleich zur Verringerung von Blendwirkungen und Reflexionen von dort jeweils in einer Reihe übereinander eingebauter Leuchtquellen 23.

Oberhalb des Bedienblocks 3 des Instrumententafelblocks 2 ist entsprechend der Breite des Bedienblocks 3 ein Bildschirmeinsatz 7 angebracht. Dieser Bildschirmeinsatz 7 ist in der Darstellung der Fig. 1 in dem Instrumententafelblock 2 in einer Ruhestellung 10 versenkt. In der Darstellung der Fig. 2 ist der Bildschirmeinsatz 7 dagegen in eine Gebrauchsstellung 11 ausgeschwenkt.

Wie in der Fig. 1 strichliert eingezeichnet, ist der Bildschirmeinsatz 7 in der Ruhestellung 10 in einem Aufnahmeraum 13 des Instrumententafelblocks 2 versenkt. Dabei fluchtet der Bildschirmeinsatz 7 mit der ihn umgebenden Instrumententafelwand 15. Die Außenseite der Bildschirmeinsatzsichtwand 14 weist dabei eine Querverwellung 12 entsprechend der Querwellung 16 der Instrumententafelwand 15 auf.

Der Bildschirmeinsatz 7 ist über eine horizontale Querachse 17 schwenkbar mit dem Instrumententafelblock 2 verbunden. Zur Verschwenkung des Bildschirmeinsatzes 7 in die in der Fig. 2 gezeigte Gebrauchsstellung 11 ist ein Federantrieb in Form einer in der Fig. 2 strichliert eingezeichneten Spiralfeder 18 als Drehfeder vorgesehen. Diese eine Spiralfeder 18 ist hier lediglich beispielhaft in einem randseitigen Bereich des Aufnahmeraums 13 im Querachsenbereich angeordnet. Dabei stützt sich ein erster Federschenkel 19 der Spiralfeder 18 am Instrumententafelblock 2 und ein zweiter Federschenkel 20 der Spiralfeder 18 am Bildschirmeinsatz 7 ab. Alternativ können auch einzeln oder in Kombinationen Spiralfedern 18 als Drehfedern und/oder Zugfedern und/oder Druckfedern vorgesehen sein.

Der Bildschirmeinsatz 7 ist durch die Spiralfeder 18 einseitig nur in Richtung auf die Gebrauchsstellung 11 vorgespannt und in der versenkten Ruhestellung 10 durch eine Ruhestellungsraste 21, die in der Darstellung der Fig. 2 lediglich strichliert eingezeichnet ist, gehalten. Bei einem erneuten Druck auf den Bildschirmeinsatz 7 wird die Ruhestellungsraste 21 freigegeben und der Bildschirmeinsatz 7 bewegt sich aufgrund der durch die Spiralfeder 18 aufgebrachten Federkraft in seine Gebrauchsstellung 11. Alternativ kann die Verriegelung des Bildschirmeinsatzes 7 in der Ruhestellung 10 durch die Ruhestellungsraste 21 auch durch Druck auf eine Taste des Bedienfelds 3 gelöst werden.

Die Federkraft ist dabei so dimensioniert, dass der Bildschirmeinsatz 7 auch bei einer von außen auf das Kraftfahrzeug wirkenden Erschütterung stets in seiner Gebrauchsstellung 11 gehalten ist und sich nicht bewegt. Um insbesondere bei einer stärkeren Auslegung der Spiralfeder 18 eine schnelle und ruckartige Bewegung des Bildschirmeinsatzes 7 in seine Gebrauchsstellung 11 zu vermeiden, ist im Bereich der Spiralfeder 18 wenigstens ein Dämpfungsglied zur Verlangsamung und Vergleichmäßigung der Bewegungsabläufe eingesetzt, was hier allerdings nicht dargestellt ist.

In der Gebrauchsstellung 11 des Bildschirmeinsatzes 7 nimmt ein Bildschirm 22 des Bildschirmeinsatzes 7 eine optimal einsehbare Stellung in einer vertikalen Querebene des Kraftfahrzeugs ein. Die Bildschirmeinsatzsichtwand 14 und der Bildschirm 22 sind dabei fest in einer Winkelanordnung angebracht mit Seitenwänden 26, 27, die im ausgeklappten Zustand des Bildschirmeinsatzes 7 je einen seitlichen Abschluss bilden.

## Patentansprüche

1. Instrumententafel eines Kraftfahrzeugs mit einem versenkbaren Bildschirmeinsatz (7), mit einem Aufnahmeraum (13) in der Instrumententafel (1) für den darin versenkbaren Bildschirmeinsatz (7),
mit einer Führungs- und Halteeinrichtung als Verbindung zwischen der Instrumententafel (1) und dem Bildschirmeinsatz (7),
mit einer Antrieb- und Arretiereinrichtung für den in eine Ruhestellung (10) im Aufnahmeraum (13) versenkbaren und für den in eine Gebrauchsstellung (11) aus dem Aufnahmeraum (13) zumindest teilweise herausbewegbaren Bildschirmeinsatz (7),
**dadurch gekennzeichnet,**
**dass** die Antrieb- und Arretiereinrichtung einen Federantrieb (18) umfasst,
**dass** der Bildschirmeinsatz (7) Bestandteil eines Instrumententafelblocks (2) mit einem Bedienblock (3) ist, und
**dass** der Instrumententafelblock (2) als ganzes auf die Instrumententafel (1) als Träger aufsetzbar und dort mechanisch und über ein eingebautes Stecksystem elektrisch mit der Bordelektronik verbindbar ist.

2. Instrumententafel nach Anspruch 1, **dadurch gekennzeichnet,**
**dass** der Bildschirmeinsatz (7) oberhalb des Bedienblocks (3) in der Breite des Bedienblocks (3) angeordnet ist.

3. Instrumententafel nach Anspruch 2, **dadurch gekennzeichnet,**
**dass** an der Seite, bevorzugt zu beiden Seiten des Bedienblocks (3) und/oder des Bildschirmeinsatzes (7) streifenförmige Leuchtenfelder (8, 9) angeordnet sind, die bevorzugt eine Struktur als Querwellung (16) entsprechend einer Struktur (12) einer Bildschirmeinsatzsichtwand (14) aufweisen.

4. Instrumententafel nach einem der Ansprüche 1 bis 3, **dadurch gekennzeichnet,**
**dass** in der Ruhestellung (10) und/oder der Gebrauchsstellung (11) eine von Hand lösbare Ruhestellungsraste und/oder Gebrauchsstellungsraste angebracht ist.

5. Instrumententafel nach einem der Ansprüche 1 bis 3, **dadurch gekennzeichnet,**
**dass** durch den Federantrieb (18) der Bildschirmeinsatz (7) durch an sich bekannte Federanordnungen in der Ruhestellung (10) in die Ruhestellungsrichtung und in der Gebrauchsstellung (11) in die Gebrauchsstellungsrichtung gegen zugeordnete Anschläge vorgespannt ist mit einer Umkehr der Vorspannungsrichtung zwischen der Ruhestellung (10) und Gebrauchsstellung (11), so dass der Bildschirmeinsatz (7) durch Drücken aus der Gebrauchsstellung (11) in die Ruhestellung (10) und durch Ziehen von der Ruhestellung (10) in die Gebrauchsstellung (11) überführbar ist.

6. Instrumententafel nach einem der Ansprüche 1 bis 3, **dadurch gekennzeichnet,**
**dass** durch den Federantrieb (18) der Bildschirmeinsatz (7) in der Ruhestellung (10) in Richtung der Gebrauchsstellung (11) vorgespannt ist und in der Ruhestellung in einer Ruhestellungsraste (22) gehalten ist, die bei der Überführung des Bildschirmeinsatzes (7) in die Ruhestellung (10) einrastet und bei einem erneuten Druck in diese Richtung die Verrastung freigibt.

7. Instrumententafel nach Anspruch 6, **dadurch gekennzeichnet,**
**dass** der Bildschirmeinsatz (7) in der Gebrauchsstellung (11) durch die Federkraft des Federantriebs (18) und/oder durch eine in Richtung Ruhestellung (10) von Hand überdrückbare Gebrauchsstellungsraste gehalten ist.

8. Instrumententafel nach einem der Ansprüche 1 bis 7, **dadurch gekennzeichnet,**
**dass** die Führungs- und Halteeinrichtung als Schwenkverbindung mit einer horizontalen Querachse (17) ausgebildet ist.

9. Instrumententafel nach einem der Ansprüche 1 bis 8, **dadurch gekennzeichnet,**
**dass** der versenkte Bildschirmeinsatz (7) in seiner Ruhestellung (10) mit seiner äußeren Bildschirmeinsatzsichtwand (14) mit einer umgebenden Instrumententafelwand (15) fluchtet.

10. Instrumententafel nach Anspruch 9, **dadurch gekennzeichnet,**
**dass** die Bildschirmeinsatzsichtwand (14) in der Ruhestellung (10) in einem etwa vertikal geneigten, mittleren Bereich der Instrumententafel (1) angeordnet ist,
**dass** eine horizontale Querachse (17) einer Schwenkverbindung im oberen Bereich des Bildschirmeinsatzes (7) liegt, und
**dass** bei einem Hochschwenken der Bildschirmeinsatzsichtwand (14) in eine schräg nach oben weisende Stellung der Bildschirm (22) eine Stellung etwa in einer vertikalen Querebene einnimmt.

11. Instrumententafel nach Anspruch 10, **dadurch gekennzeichnet,**
**dass** die Bildschirmeinsatzsichtwand (14) und der Bildschirm (22) fest in einer Winkelanordnung oder gelenkig miteinander verbunden sind.

12. Instrumententafel nach einem der Ansprüche 9 bis 11, **dadurch gekennzeichnet,**
**dass** die Außenseite der Bildschirmeinsatzsichtwand (14) eine Struktur, insbesondere eine Querwellung (12) aufweist.

13. Instrumententafel nach einem der Ansprüche 1 bis 12, **dadurch gekennzeichnet,**
**dass** zwischen der Instrumententafel (1) und dem Bildschirmeinsatz (7) ein Dämpfungsglied eingebaut ist.

## Claims

1. Motor vehicle dashboard having a retractable display unit insert (7), having a receiving space (13) in the dashboard (1) for the display unit insert (7), which can be retracted therein,
having a guiding and retaining device as a connection between the dashboard (1) and the display unit insert (7),
having a driving and locking device for the display unit insert (7) which can be retracted into an inoperative position (10) in the receiving space (13) and can at least partially be moved out of the receiving space (13) into an operative position (11),
**characterized**
**in that** the driving and locking device comprises a spring drive (18),
**in that** the display unit insert (7) is part of a dashboard block (2) having a control block (3), and
**in that** the dashboard block (2) can be placed as a whole onto the dashboard (1) as a support and can be connected there mechanically and electrically, via a built-in plug-in system, to the on-board electronic system.

2. Dashboard according to Claim 1, **characterized in that** the display unit insert (7) is arranged above the control block (3) across the width of the control block (3).

3. Dashboard according to Claim 2, **characterized in that** strip-shaped light panels (8, 9) are arranged at the side, preferably at both sides, of the control block (3) and/or of the display unit insert (7), the said light panels preferably having a structure in the form of a transverse corrugation (16) corresponding to a structure (12) of a viewing wall (14) of the display unit insert.

4. Dashboard according to one of Claims 1 to 3, **characterized in that** an inoperative-position catch and/or an operative-position catch which can be released manually is fitted in the inoperative position (10) and/or the operative position (7).

5. Dashboard according to one of Claims 1 to 3, **characterized in that** the spring drive (18) causes the display unit insert (7) to be prestressed, by means of spring arrangements which are known per se, in the inoperative-position direction in the inoperative position (10) and in the operative-position direction in the operative position (11) against associated stops with the prestressing direction being reversed between the inoperative position (10) and operative position (11), with the result that the display unit insert (7) can be transferred from the operative position (11) into the inoperative position (10) by pressing and from the inoperative position (10) into the operative position (11) by pulling.

6. Dashboard according to one of Claims 1 to 3, **characterized in that** the spring drive (18) causes the display unit insert (7) to be prestressed in the direction of the operative position (11) in the inoperative position (10) and to be retained in the inoperative position in an inoperative-position catch (22) which, when the display unit insert (7) is transferred into the inoperative position (10), snaps into place and, with renewed pressure in this direction, releases the snap-in connection.

7. Dashboard according to Claim 6, **characterized in that** the display unit insert (7) is retained in the operative position (11) by the spring force of the spring drive (18) and/or by an operative-position catch which can be pressed manually in the direction of the inoperative position (10).

8. Dashboard according to one of Claims 1 to 7, **characterized in that** the gliding and retaining device is designed as a pivoting connection with a horizontal transverse axis (17).

9. Dashboard according to one of Claims 1 to 8, **characterized in that** the retracted display unit insert (7) is aligned by means of its outer viewing wall (14) of the display unit insert with a surrounding wall of the dashboard (15), in its inoperative position (10).

10. Dashboard according to Claim 9, **characterized in that** the viewing wall (14) of the display unit insert is arranged in the inoperative position (10) in an approximately vertically inclined, central region of the dashboard (1),
**in that** a horizontal transverse axis (17) of a pivoting connection is situated in the upper region of the display unit insert (7), and
**in that** when the viewing wall (14) of the display unit insert is pivoted upwards into a position pointing obliquely upwards, the display unit (22) takes up a position approximately in a vertical transverse plane.

11. Dashboard according to Claim 10, **characterized in that** the viewing wall (14) of the display unit insert and the display unit (22) are connected to each other fixedly in an angular arrangement or in an articulated manner.

12. Dashboard according to one of Claims 9 to 11, **characterized in that** the outside of the viewing wall (14) of the display unit insert has a structure, in particular a transverse corrugation (12).

13. Dashboard according to one of Claims 1 to 12, **characterized in that** the damping element is fitted between the dashboard (1) and the display unit insert (7).

## Revendications

1. Tableau de bord de véhicule à moteur avec un écran rétractable (7), avec un espace de réception (13) dans le tableau de bord (1) pour l'écran rétractable (7) s'y trouvant,
avec un dispositif de guidage et de fixation servant de connexion entre le tableau de bord (1) et l'écran (7),
avec un dispositif d'entraînement et d'arrêt pour l'écran (7) pouvant être rétracté dans une position de repos (10) dans l'espace de réception (13) et pouvant être ressorti au moins partiellement dans une position d'utilisation (11) hors de l'espace de réception (13),
**caractérisé en ce que**
le dispositif d'entraînement et d'arrêt comprend un entraînement par ressort (18),
**en ce que** l'écran (7) fait partie d'un bloc (2) du tableau de bord comprenant un bloc de commande (3), et
**en ce que** le bloc (2) du tableau de bord peut être placé en tant que support dans son ensemble sur le tableau de bord (1) et peut y être connecté électriquement au système électronique de bord par le biais d'un système d'enfichage intégré.

2. Tableau de bord selon la revendication 1, **caractérisé en ce que** l'écran (7) est disposé au-dessus du bloc de commande (3) dans la largeur du bloc de commande (3).

3. Tableau de bord selon la revendication 2, **caractérisé en ce que** du côté du bloc de commande (3), de préférence des deux côtés du bloc de commande (3), et/ou de l'écran (7), sont disposés des champs lumineux en forme de bandes, qui présentent de préférence une structure sous forme d'ondulation transversale correspondant à une structure (12) d'une paroi visible de l'écran (14).

4. Tableau de bord selon l'une quelconque des revendications 1 à 3, **caractérisé en ce qu'**un cran d'arrêt de position de repos et/ou un cran d'arrêt de position d'utilisation, libérable à la main, est monté dans la position de repos (10) et/ou la position d'utilisation (11).

5. Tableau de bord selon l'une quelconque des revendications 1 à 3, **caractérisé en ce que** l'écran (7) est précontraint par l'entraînement par ressort (18) dans la position de repos (10) dans la direction de la position de repos par des agencements de ressort connus en soi, et dans la position d'utilisation (11) dans la direction de la position d'utilisation contre des butées associées, et avec une inversion de la direction de la précontrainte entre la position de repos (10) et la position d'utilisation (11), de sorte que l'écran (7) puisse être transféré par pression hors de la position d'utilisation (11) dans la position de repos (10) et par traction de la position de repos (10) dans la position d'utilisation (11).

6. Tableau de bord selon l'une quelconque des revendications 1 à 3, **caractérisé en ce que** l'écran (7) est précontraint par l'entraînement par ressort (18) dans la position de repos (10) dans la direction de la position d'utilisation (11), et est maintenu dans la position de repos dans un cran d'arrêt de position de repos (21), qui s'enclenche lors du transfert de l'écran (7) dans la position de repos (10) et libère l'enclenchement dans cette direction lors d'une pression renouvelée.

7. Tableau de bord selon la revendication 6, **caractérisé en ce que** l'écran (7) est maintenu dans la position d'utilisation (11) par la force de ressort de l'entraînement par ressort (18) et/ou par un cran d'arrêt de position d'utilisation pouvant être pressé manuellement dans la direction de la position de repos (10).

8. Tableau de bord selon l'une quelconque des revendications 1 à 7, **caractérisé en ce que** le dispositif de guidage et d'arrêt est réalisé en tant que connexion pivotante avec un axe transversal (17) horizontal.

9. Tableau de bord selon l'une quelconque des revendications 1 à 8, **caractérisé en ce que** l'écran rétractable (7) vient en affleurement, avec une paroi visible extérieure (14) de l'écran, avec une paroi périphérique du tableau de bord (15) dans sa position de repos (10).

10. Tableau de bord selon la revendication 9, **caractérisé en ce que** la paroi visible (14) de l'écran est disposée dans la position de repos (10) dans une partie centrale approximativement inclinée verticalement du tableau de bord (1), **en ce qu'**un axe transversal horizontal (17) d'une connexion pivotante est situé dans la partie supérieure de l'écran (7), et **en ce que** lors d'un pivotement vers le haut de la paroi visible (14) de l'écran dans une position oblique tournée vers le haut, la vitre de l'écran (22) adopte une position approximativement dans un plan transversal vertical.

11. Tableau de bord selon la revendication 10, **caractérisé en ce que** la paroi visible (14) de l'écran et la vitre de l'écran (22) sont connectées fixement dans un agencement angulaire ou de manière articulée l'une à l'autre.

12. Tableau de bord selon l'une quelconque des revendications 9 à 11, **caractérisé en ce que** le côté extérieur de la paroi visible (14) de l'écran présente une structure, en particulier une ondulation transversale (12).

13. Tableau de bord selon l'une quelconque des revendications 1 à 12, **caractérisé en ce qu'**un organe d'amortissement est intégré entre le tableau de bord (1) et l'écran (7).
